Europäisches Patentamt

European Patent Office

Office européen des brevets

(11) Publication number: **0 178 104**
**B1**

# EUROPEAN PATENT SPECIFICATION

(45) Date of publication of patent specification: **12.07.89**

(51) Int. Cl.⁴: **G 01 F 1/74,** G 01 F 1/76, G 01 F 1/88

(21) Application number: **85306954.0**

(22) Date of filing: **30.09.85**

(54) Flowmeter.

(30) Priority: **01.10.84 US 656210**

(43) Date of publication of application:
**16.04.86 Bulletin 86/16**

(45) Publication of the grant of the patent:
**12.07.89 Bulletin 89/28**

(84) Designated Contracting States:
**DE FR GB IT SE**

(56) References cited:
**US-A-2 897 672**
**US-A-3 203 241**
**US-A-4 216 673**

(73) Proprietor: **THE BABCOCK & WILCOX COMPANY**
**1010 Common Street P.O. Box 60035**
**New Orleans Louisiana 70160 (US)**

(72) Inventor: **Kim, Raymond Keeheun**
**4731 Tanglewood Ct. NE**
**Canton Ohio 44714 (US)**

(74) Representative: **Purvis, William Michael Cameron et al**
**D. Young & Co. 10 Staple Inn**
**London WC1V 7RD (GB)**

Courier Press, Leamington Spa, England.

## Description

The invention relates to apparatus for measuring the mass flow rate of a mixture of solids and air flowing within a conduit, and has particular though not exclusive application to reaction mass flowmeters for pulverized coal.

A common approach to the measurement of mass flow rate of solid particles in a pneumatic conveying system has been to measure the volumetric flow rate (Q) or the bulk velocity (V) of the mixture, measure the bulk density (ρ) of the mixture, and then combine the two measurements in order to determine the mass flow rate (ṁ) of the mixture:

$$\dot{m} = \rho Q = \rho VA$$

where A is equal to the cross-sectional area of the pipe. This approach is used in Patent Specification US—A—4 216 673 wherein a diffential pressure unit (DPU) across an orifice and a pipe section is combined with a turbine meter to derive mass flow rate or density.

Direct measurement of the volumetric flow rate is complicated by the velocity of the particles being different to that of the air, which is known as "slip velocity". The slip velocity of an entrained solid particle depends mainly on the size and shape of the particles within the same transport system. It is extremely difficult, however, to measure with reasonable accuracy the slip velocities of all the individual particles in any flow system. Attempts have been made to estimate the "average" slip velocity of the particles, however, this approach requires knowledge of the particle size distribution, which is not readily available in-situ. Moreover, determination of the bulk density of the mixture is not a straightforward operation because of the spatial and temporal mal-distribution of the particles. Accordingly, the synthesizing approach has not been successful.

It has also been proposed that, in a reaction mass flowmeter, the reaction force generated by the flow momentum is measurable by one or more strain gauges attached to the flexure point of a 90 degree elbow concentrically placed inside another elbow. The reacting inside elbow is fixed at the upstream end, and the downstream end is unsupported so that it can translate in response to the flow momentum and vibrate freely at its natural frequency. The steady output of the strain gauge is a measure of the flow momentum, while the fluctuating component can be analyzed for its natural frequency, which is a function of the density of the mixture passing through the elbow section. While such an arrangement can be expected to work well with relatively dense mixtures, such as coal slurries of water or oil, it is not considered to be practical for lightly loaded pneumatic systems such as pulverized coal transport lines, at least partially due to the fact that the large mass of the elbow compared to the relatively small changes in the density makes such a system too insensitive to be useful.

A slight variation of this approach is described in Patent Specification US—A—2 897 672 wherein electrical resistance strain gauges are used to measure the reactive force of the fluid as it backs up in the transition tube and circulates within the elbow chamber around the outside of the straight tube and the elbow tube. An annular weight is installed on the unsupported end of the elbow tube to minimise the effect of resonance.

Another approach to measuring volumetric flow employs a magnetostrictive element. As described in Patent Specification US—A—3 203 241 a force is exerted on the magnetostrictive element in accordance with the flow rate of the medium and is then translated via the magnetostrictive properties of the element into a corresponding electrical signal.

According to one aspect of the invention there is provided apparatus for measuring the mass flow rate of a mixture of solids and air flowing within a conduit characterised by an orifice flowmeter having an orifice within the conduit with means to measure the pressure differential across the orifice so as to measure the volumetric flow rate independently of the solids concentration, a reaction mass flowmeter so connected to the conduit as to determine the velocity of the mixture and processing means arranged to calculate the mass flow rate of the mixture from measurements of the orifice flowmeter and the reaction mass meter, the reaction mass flowmeter comprising an inner elbow having a first inlet end attached to the conduit, and a free outlet end, an outer elbow surrounding the inner elbow and attached at one end to the inner elbow adjacent the first end and at its opposite end to the conduit, and a load cell having a sensing element attached to the inner elbow in a position to sense the reaction force applied to the inner elbow by the mixture as the mixture changes direction as it flows through the inner elbow.

According to another aspect of the invention there is provided a method of measuring the mass flow rate of a mixture of solids and air flowing in a conduit characterised by using an orifice flowmeter to measure pressure differential across an orifice plate and thus the volumetric air flow rate independently of the solids concentration; using a reaction mass flowmeter to measure reaction force, by means of a load cell attached to an elbow of the reaction flowmeter and sensing the reaction force applied to the elbow by the fluid as the fluid changes direction as it flows through the elbow; and calculating the mass flow rate of the mixture, the mass flow rate of the air and the mass flow rate of the solids using the measurements of the orifice and reaction mass flowmeters.

The orifice meter is designed to measure the air flow rate, ignoring the solid particles in the system. The reaction force measured at the elbow is an indication of the sum total momentum generated by the air and the coal particles emerging from the elbow. It is recognized that many of the coal particles could be moving at lower velocities than the air, however, the difference between the actual velocities of the coal particles and the velocity of the air is used in reducing the data and can be compensated by a calibration factor (or equation) as explained below:

(a) Velocity of the air, $V_a$, is determined by:

$$Q = C\sqrt{\Delta P/\rho a} \qquad (1)$$

where

Q=volumetric rate of flow
$\Delta P$=differential pressure across the orifice flowmeter
$\rho a$=density of the air
C=meter coefficient    (=cA)

$$V_a = Q/A \qquad (2)$$

where

A=cross-sectional area of pipe
(b) Reaction force, F, measured at the elbow is:

$$F = \rho m \, QV_m \qquad (3)$$

where

$\rho m$=density of the mixture
$V_m$=velocity of the mixture
(c) Mass flow rate of the mixture, $\dot{m}_m$, is calculated by:

$$\dot{m}_m - F/V_a = \rho m \, QV_m/V_a \qquad (4)$$

It is recognized that $V_m/V_a \neq 1$, however, a calibration factor (K) can be derived based on experimental data such that $K \, V_m/V_a = 1$ whereby the mass flow rate can be determined by:

$$\dot{m}_m = KF/V_a \qquad (5)$$

(d) Mass flow rate of the coal, $\dot{m}_c$, is calculated by:

$$\dot{m}_c = \dot{m}_m - \dot{m}_a \qquad (6)$$

where mass flow rate of air, $\dot{m}_a = \rho a Q$

Thus, the mass flow rate of the mixture can be determined from two relatively simple measurements, and a calibration factor or equation.

An important advantage is that detailed knowledge is not required of the particle size, slip velocity and the mixture density, all of which are very difficult to measure. The two basic measurements, the air flow rate and the reaction force, not only give the mixture and the air flow rates, but also the coal mass flow rate as well.

The invention is diagrammatically illustrated by way of example with reference to the accompanying drawing, in which:—

Figure 1 is a sectional view of a reaction force measurement element of one embodiment of apparatus according to the invention; and

Figure 2 is a schematic view of a differential pressure measurement element of one embodiment of apparatus according to the invention.

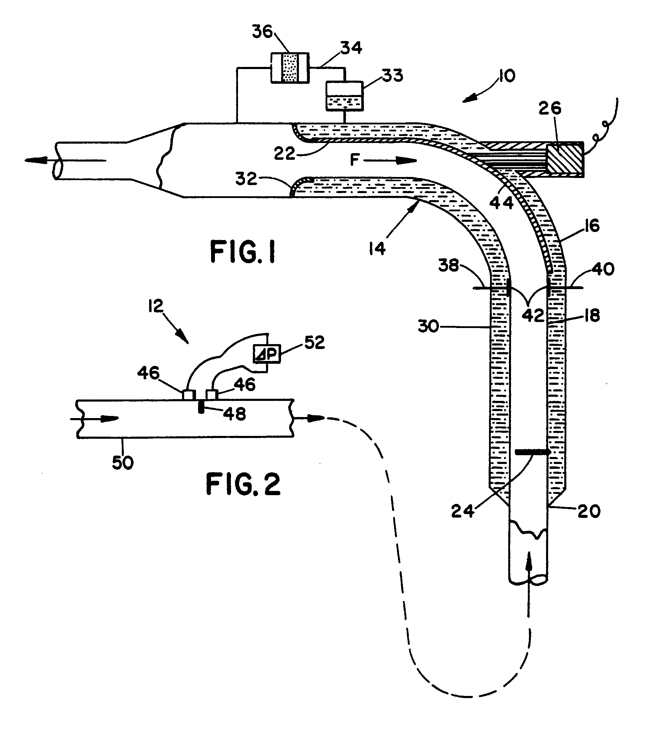

Referring to the drawing, a reaction mass flowmeter system comprises the combination of a reaction force measurement element 10 shown in Figure 1, and a differential pressure measurement element 12 shown in Figure 2.

Referring to Figure 1, the reaction force measurement element 10 comprises an elbow assembly 14 which is part of a piping system carrying a mixture of, for example, pulverized coal and air. The elbow assembly includes an outer elbow 16 and an inner elbow 18. The inner elbow is anchored to the outer elbow at a position 20, and has a free end 22. A flexure hinge is integral with the inner elbow 18 and is in the form of an elastomeric seal 24 connecting separate sections of the inner elbow. A load cell 26 mounted on the outer elbow 16, has its sensing element attached to the inner elbow 18. In accordance with known characteristics of such devices, the change in direction which the fluid undergoes as it flows through the elbow assembly 14 results in a reaction force F, indicated by the arrow in Figure 1, acting on the inner elbow 18, which is proportional to the density and the velocity of the mixture, the force being measured by the load cell 26.

Under some conditions, excessive vibration of the inner elbow can occur. Accordingly, a liquid is provided in the annular space 30 between the inner and outer elbows to dampen such vibrations. The connection between the elbows at the restrained end of the inner elbow can be a fixed connection, such as by welding, however, the free end 22 of the inner elbow 18 is connected to the outer elbow 16 by means of a flexible seal element 32. To compensate for expansion, a reservoir 33 is connected between the annular space 30 and the outlet of the elbow assembly 14 by a pressure equalization line 34, which includes a filter 36.

In order physically to restrain the inner elbow 18 in the event of excessive vibration amplitude, a plurality of restrainers 38 (e.g. six to eight) are disposed between the inner and outer elbows. The actual configuration of these restrainers is not critical but they can be in the form of rods 40 extending through and attached to the outer elbow, and plates 42 attached to the ends of the rods and normally spaced from the inner elbow.

Means are preferably provided to compensate for the erosion of the inner surface of the inner elbow 18 when abrasive mixtures such as one containing pulverized coal are being measured. Such means is shown as a wear plate 44 fixed to the inside of the inner elbow 18, which prevents premature wear-through of the elbow. Since the change in weight of the elbow will affect the force measurement, the load cell 26 includes means to re-zero it whenever the flow is shut off.

The pressure differential can be measured either upstream or downstream of the elbow assembly by known means. In accordance with a preferred embodiment, as shown in Figure 2, first and second diaphragm-type sealed pressure taps 46 are located on opposite sides of a segmented orifice plate 48 located in a horizontal run 50 of a piping system of which the elbow assembly 14 is a part. The pressure taps 46 are connected to a pressure differential readout element 52, in known manner.

In operation, the mass flow rates can be measured using equations (1) to (6), using the force measurement determined by means of the reaction force measuring element 10, and the pressure differential as measured by the differential pressure measurement element 12, as described in detail above.

Various modifications and improvements are possible, for example the flow direction could be reversed from that shown in Figures 1 and 2.

## Claims

1. Apparatus for measuring the mass flow rate of a mixture of solids and air flowing within a conduit characterised by an orifice flowmeter having an orifice within the conduit (50) with means (46, 52) to measure the pressure differential across the orifice so as to measure the volumetric flow rate independently of the solids concentration, a reaction mass flowmeter (10) so connected to the conduit (50) as to determine the velocity of the mixture and processing means arranged to calculate the mass flow rate of the mixture from measurements of the orifice flowmeter and the reaction mass meter, the reaction mass flowmeter (10) comprising an inner elbow (18) having a first inlet end (20) attached to the conduit, and a free outlet end (22), an outer elbow (16) surrounding the inner elbow (18) and attached at one end to the inner elbow adjacent the first end (20) and at its opposite end to the conduit, and a load cell (26) having a sensing element attached to the inner elbow (18) in position to sense the reaction force applied to the inner elbow (18) by the mixture as the mixture changes direction as it flows through the inner elbow (18).

2. Apparatus according to claim 1, in which said means to measure the pressure differential comprises first and second diaphragm-type sealed pressure taps (46) disposed on opposite sides of an orifice plate (48).

3. Apparatus according to claim 1 or claim 2, including means for sealing an annular space (30) defined between the inner (18) and outer (16) elbows, the annular space (30) being filled with a damping fluid.

4. Apparatus according to claim 3, in which the outer elbow (16) is fixedly attached to the inner elbow (18) adjacent the first end (20), and a flexible connection (32) is provided between the outer elbow (16) and the inner elbow (18) at the free end (22) of the inner elbow.

5. Apparatus according to claim 4, including a pressure equalization line (34) connected between the annular space (30) and the conduit downstream of the annular space (30), and an expansion reservoir (33) connected in the line.

6. Apparatus according to claim 1, in which the inner elbow is segmented adjacent the inlet end and includes a first segment attached to the conduit, a second coaxial segment, and flexible means (24) connecting the first and second segments.

7. Apparatus according to claim 1, including a wear plate (44) attached to at least a portion of the interior of the inner elbow (18) in the area of the bend thereof.

8. Apparatus according to claim 1, including restraining means (40, 42) attached to the outer elbow (16) and positioned to contact the inner elbow (18) when the inner elbow (18) deflects more than a predetermined amount.

9. A method of measuring the mass flow rate of a mixture of solids and air flowing in a conduit characterised by using an orifice flowmeter to measure pressure differential across an orifice plate and thus the volumetric air flow rate independently of the solids concentration; using a reaction mass flowmeter to measure reaction force, by means of a load cell attached to an elbow of the reaction flowmeter and sensing the reaction force applied to the elbow by the fluid as the fluid changes direction as it flows through the elbow; and calculating the mass flow rate of the mixture, the mass flow rate of the air and the mass flow rate of the solids using the measurements of the orifice and reaction mass flowmeters.

## Patentansprüche

1. Vorrichtung zum Messen der Massenflußrate einer Mischung von Feststoffen und Luft, welche durch eine Leitung fliessen, gekennzeichnet durch ein Blendenflußmeßgerät, welches innerhalb der Leitung (50) eine Öffnung aufweist mit Mitteln (46, 52), um die Druckdifferenz über der Blendenöffnung zu messen und dadurch die Volumenflußrate unabhängig von der Feststoffkonzentration zu messen, ein Reaktions-Massenflußmeßgerät (10), welches derartig an die Leitung (50) angeschlossen ist, daß es die Geschwindigkeit der Mischung bestimmt, und eine Prozessoreinrichtung, welche so ausgelegt ist, daß sie die Massenflußrate der Mischung aus den Messungen des Blendenflußmeßgerätes und des Reaktionsmassenmeßgerätes berechnet, wobei das Reaktions-Massenflußmeßgerät (10) einen inneren Krümmer (18) aufweist, der ein erstes Einlaßende (20) aufweist, welches an der Leitung angebracht ist, und ein freies Auslaßende (22), einen äußeren Krümmer (16), welcher den inneren Krümmer (18) umgibt und an einem Ende an dem inneren Krümmer angebracht ist, welches zunächst dem ersten Ende (20) liegt, und an seinem entgegengesetzten Ende an der Leitung angebracht ist, und eine Belastungszelle (26), welche ein Abfühlelement hat, das an dem inneren Krümmer (18) an einer Stelle angebracht ist, daß es die Reaktionskraft abfühlt, welche auf den inneren Krümmer (18) von der Mischung ausgeübt wird, wenn diese ihre Richtung ändert, während sie durch den inneren Krümmer (18) fließt.

2. Vorrichtung nach Anspruch 1, wobei die Einrichtung zum Messen der Druckdifferenz erste und zweite membranartig abgedichtete Druckaufnehmer (46) aufweist, welche auf gegenüberliegenden Seiten einer Blendenplatte (48) angeordnet sind.

3. Vorrichtung nach Anspruch 1 oder 2, welche Mittel zum Abdichten eines ringförmigen Raumes (30) einschließt, der zwischen dem inneren (18) und dem äußeren (16) Krümmer definiert ist, wobei der ringförmige Raum (30) mit einem Dämpfungsfluid gefüllt ist.

4. Vorrichtung nach Anspruch 3, wobei der äußere Krümmer (16) an dem inneren Krümmer (18) unmittelbar an dem ersten Ende (20) fest angebracht ist, und wobei eine flexible Verbindung (32) zwischen dem äußeren Krümmer (16) und dem inneren Krümmer (18) an dem freien Ende (22) des inneren Krümmers vorgesehen ist.

5. Vorrichtung nach Anspruch 4, welche eine Druckausgleichsleitung (34) einschließt, die zwischen dem ringförmigen Raum (30) und der Leitung stromabwärts von dem ringförmigen Raum (30) angeschlossen ist, sowie einen Ausgleichsbehälter (33) aufweist, welcher an die (Ausgleichs-) Leitung angeschlossen ist.

6. Vorrichtung nach Anspruch 1, bei welcher der innere Krümmer am Einlaßende in Segmente aufgeteilt ist und ein erstes Segment aufweist, welches an die Leitung angeschlossen ist, ein zweites koaxiales Segment aufweist, und flexible Mittel (24) aufweist, welche das erste und zweite Segment miteinander verbinden.

7. Vorrichtung nach Anspruch 1, welche eine Verschleißplatte (44) aufweist, die an zumindest einem Abschnitt des Inneren des inneren Krümmers (18) im Bereich von dessen Krümmung angebracht ist.

8. Vorrichtung nach Anspruch 1, welche Haltemittel (40, 42) aufweist, die an dem äußeren Krümmer (16) angebracht sind und so angeordnet sind, daß sie mit dem inneren Krümmer (18) in Berührung treten, wenn dieser um mehr als einen vorbestimmten Betrag ausschlägt.

9. Verfahren zum Messen der Massenflußrate einer Mischung von Feststoffen und Luft, welche durch eine Leitung fliessen, gekennzeichnet durch die Verwendung eines Blendenflußmeßgerätes, um die Druckdifferenz über einer Blendenplatte und damit die Volumenflußrate der Luft unabhängig von der Feststoffkonzentration zu messen; die Verwendung eines Reaktions-Massenflußmeßgerätes, um die Reaktionskraft zu messen mit Hilfe einer Belastungszelle, welche an einem Krümmer des Reaktions-Flußmeßgerätes angebracht ist, und durch Abfühlen der Reaktionskraft, welche auf den Krümmer durch das Fluid übertragen wird, wenn dieses während des Flusses durch den Krümmer seine Richtung ändert; und durch Berechnen der Messenflußrate der Mischung, der Massenflußrate der Luft und der Massenflußrate der Feststoffe unter Verwendung der Messungen des Blenden- und des Reaktions-Massenflußmeßgerätes.

**Revendications**

1. Appareil pour la mesure du débit massique d'un mélange de solides et d'air s'écoulant dans un conduit caractérisé par un débitmètre à orifice présentant à l'intérieur du conduit (50) un orifice muni d'un moyen (46, 52) propre à mesurer la différence de pression entre les deux côtés de l'orifice afin de mesurer le débit volumétrique indépendamment de la concentration en solides, un débitmètre de masse à réaction (10) relié au conduit (50) en sorte de déterminer la vitesse du mélange et un moyen de traitement agencé pour calculer le débit massique du mélange d'après des mesures faites par le débitmètre à orifice et par le débitmètre de masse à réaction, le débitmètre de masse à réaction (10) comportant un coude intérieur (18) qui présente une première extrémité d'entrée (20) fixée au conduit et une extrémité de sortie libre (22), un coude extérieur (16) entourant le coude intérieur (18) et fixé par une extrémité au coude intérieur près de la première extrémité (20) et par son extrémité opposée au conduit, et une cellule dynamométrique (26) comportant un élément capteur fixé au coude intérieur (18) à un emplacement voulu pour déceler la force de réaction appliquée au coude intérieur (18) par le mélange lorsque celui-ci change de direction en s'écoulant à travers le coude intérieur (18).

2. Appareil selon la revendication 1, dans lequel ledit moyen de mesure de différence de pression est constitué par une première et une seconde prises de pression étanchées à membrane (46) disposées de part et d'autre d'un diaphragme de débitmètre (48).

3. Appareil selon la revendication 1 ou la revendication 2, comportant un moyen pour étancher un espace annulaire (30) défini entre les coudes intérieur (18) et extérieur (16), l'espace annulaire (30) étant rempli d'un fluide amortisseur.

4. Appareil selon la revendication 3, dans lequel le coude extérieur (16) est fixé de manière permanente au coude intérieur (18) près de la première extrémité (20), et un raccordement flexible (32) est prévu entre le coude extérieur (16) et le coude intérieur (18) à l'extrémité libre (22) du coude intérieur.

5. Appareil selon la revendication 4, comportant un conduit d'égalisation de pression (34) montée entre l'espace annulaire (30) et le conduit en aval de l'espace annulaire (30), et un réservoir de dilatation (33) interposé sur la conduite.

6. Appareil selon la revendication 1, dans lequel le coude intérieur est segmenté près de l'extrémité d'entrée et comporte un premier segment fixé au conduit, un second segment coaxial et un moyen flexible (24) reliant les premier et second segments.

7. Appareil selon la revendication 1, comportant une plaque d'usure (44) fixée à une partie au moins de l'intérieur du coude intérieur (18) dans la zone de flexion de celui-ci.

8. Appareil selon la revendication 1, comportant un moyen-entrave (40, 42) fixé au coude extérieur (16) et placé en sorte de porter contre le coude intérieur (18) quand celui-ci se déforme au-delà d'un degré déterminé.

9. Procédé pour la mesure du débit massique d'un mélange de solides et d'air s'écoulant dans un conduit caractérisé en ce qu'on a recours à un débit-mètre à orifice pour mesurer la différence de pression entre les deux côtés d'une plaque à orifice et ainsi le débit d'air volumétrique indépendamment de la concentration en solides; on utilise un débitmètre de masse à réaction pour mesurer une force de réaction, au moyen d'une cellule dynamométrique fixée à un coude du débitmètre à réaction et on décèle la force de réaction que le fluide applique au coude lorsqu'il change de direction en s'écoulant à travers le coude; et l'on calcule le débit de masse du mélange, le débit de masse de l'air et le débit de masse des solides en utilisant les mesures faites par les débitmètres à orifice et de masse à réaction.

FIG. 1

FIG. 2